# EUROPÄISCHE PATENTSCHRIFT

(11) **EP 0 555 806 B1**
(45) Veröffentlichungstag und Bekanntmachung des Hinweises auf die Patenterteilung: **03.04.1996**
(21) Anmeldenummer: 93101968.1
(22) Anmeldetag: 09.02.1993
(51) Int. Cl.: H02G 3/26

(54) **Befestigungskonsole für Kabelkanäle, wie Brüstungskanäle, an einer Wand od. dgl.**
Fixing bracket for cable channels, such as wall trunking, to a wall or similar
Console de fixation pour chemins de câbles, en particulier goulottes de paroi, à une paroi ou similaire

(30) Priorität: 11.02.1992 DE 4203919
(43) Veröffentlichungstag der Anmeldung: 18.08.1993
(73) Patentinhaber: Hermann Kleinhuis GmbH. & Co. KG, D-58507 Lüdenscheid (DE)
(72) Erfinder: Henniger,Dieter, W-5885 Schalksmühle (DE); Kleinkorres,Uwe, W-5802 Wetter 1 (DE)
(74) Vertreter: Buse, Karl Georg, Dipl.-Phys.

(56) Entgegenhaltungen:
- EP-A- 0 112 753
- WO-A-89/12340
- DE-A- 3 928 326

## Beschreibung

Die Erfindung bezieht sich auf eine Befestigungskonsole für Kabelkanäle, wie Brüstungskanäle an einer Wand od.dgl., bestehend aus zwei plattenförmigen Grundkörpern, deren gegenseitige Lage unter Benutzung von Feststelleinrichtungen veränderbar ist, und die einerseits einen an der Wand od.dgl. anzubringenden Befestigungswinkel und andererseits einen Anschlußwinkel für den Kabelkanal aufweisen, wobei die beiden plattenförmigen Grundkörper der Befestigungskonsole untereinander gleichgestaltet sind und einen einzigen zentralen Feststeller aufweisen, und daß jeder der beiden plattenförmigen Grundkörper ein Langloch aufweist, und daß diese Grundkörper um 90° versetzt zueinander angeordnet sind, derart, daß sich ihre Langlöcher überlappen, und daß der zentrale Feststeller beide Langlöcher der beiden Grundkörper durchgreift.

Eine solche Befestigungskonsole für Kabelkanäle ist bekanntgeworden durch die DE 39 28 326 Al. Diese bekannte Befestigungskonsole hat an sich den erheblichen Vorteil, daß für die Herstellung beider plattenförmiger Grundkörper nur ein einziges Werkzeug benötigt wird. Mit diesem Werkzeug wird zugleich das Langloch erzeugt. Dadurch, daß die beiden plattenförmigen Grundkörper um 90° zueinander versetzt werden, kommen auch die beiden Langlöcher in eine solche Lage, daß sie einen Winkel von 90° miteinander einschließen. Da die beiden Langlöcher in ihrer gegenseitigen Winkellage einander überlappen, können sie von Bereichen des Feststellers durchgriffen werden Vorteilhaft ist ferner, daß die Länge des Langloches das Maß der gegenseitigen Lageveränderung der beiden plattenförmigen Grundkörper zueinander bestimmt. Insoweit haben sich derartige Befestigungskonsolen in der Praxis auch gut bewährt.

Auf der anderen Seite hat die bekannte Ausführungsform der Befestigungskonsole nach DE 39 28 326 Al den Nachteil, daß nur eine kraftschlüssige Verbindung zum Einhalten der Befestigungslage vorhanden ist. Diese kraftschlüssige Verbindung ist nur in der Lage, verhältnismäßig geringe äußere, auf die Befestigungskonsole einwirkende Kräfte aufzunehmen.

Hier will die Erfindung einsetzen. Sie will unter Aufrechterhaltung der aufgezeigten Vorteile der bekannten Befestigungskonsole nach DE 39 28 326 Al diese weiterverbessern, insbesondere derart, daß von der Befestigungskonsole nunmehr auch große, von außen einwirkende Kräfte aufgenommen werden können.

Der Erfindung liegt daher zunächst die Aufgabe zugrunde, Befestigungskonsolen der eingangs näher gekennzeichneten Art weiter zu verbessern, insbesondere derart, daß deren Einzelteile so miteinander verbunden werden, daß bei Beibehaltung der wirtschaftlichen Fertigbankeit große Kräfte aufgenommen werden können. Eine weitere Aufgabe der Erfindung besteht darin, die Verbindung zwischen dem Kabelkanal einerseits und dem Anschlußwinkel andererseits zu verbessern.

Zur Lösung dieser Aufgabe wird erfindungsgemäß vorgeschlagen, daß die plattenförmigen Grundkörper der Befestigungskonsole unter Aufrechterhaltung der Möglichkeit der relativen gegenseitigen Verschiebung zueinander durch Teile eines Verbinders formschlüssig miteinander verbunden sind, wobei der Verbinder der plattenförmigen Grundkörper als Zwischenplatte ausgebildet ist, die nach diametral gegenüberliegenden Seiten aus der Grundebene vorragende Nasen aufweist, von denen die eine Nase in das eine Langloch des Grundkörpers und die andere Nase in das andere Langloch des anderen Grundkörpers der Befestigungskonsole eingreifen.

Im Vergleich mit der bekannten Befestigungskonsole nach DE 39 28 326 A1 ergibt sich nach wie vor der Vorteil, daß nur ein einziges Werkzeug für die Herstellung beider plattenförmiger Grundkörper erforderlich ist. Nach wie vor erhalten die beiden plattenförmigen Grundkörper auch jeweils ein Langloch, wobei beim Zusammensetzen der Teile diese beiden plattenförmigen Grundkörper mit ihren Langlöchern um 90° zueinander versetzt angeordnet sind. Es ist im Vergleich mit der bekannten Ausführungsform der Befestigungskonsole nunmehr aber zusätzlich eine formschlüssige Verbindung zwischen den beiden plattenförmigen Grundkörpern vorhanden Dadurch ist die Belastbarkeit der Befestigungskonsole durch einwirkende äußere Kräfte erheblich verbessert Der zur Erzielung der formschlüssigen Verbindung zwischen den beiden Grundkörpern vorgesehene Verbinder läßt sich in wirtschaftlicher Weise herstellen, insbesondere wenn man den Verbinder mit Stanznasen ausrüstet. Diese greifen wechselseitig in die Langlöcher der plattenförmigen Grundkörper ein. Sie ermöglichen ein kreuzförmiges Verschieben bei gleichzeitig hochbelastbarem Verdrehschutz der plattenförmigen Grundkörper der Befestigungskonsole.

In dem Verbinder werden durch gleichzeitiges Freischneiden Abschnitte freigelegt, die dann nach entgegengesetzten Richtungen aus der Grundebene der Zwischenplatte abgebogen werden. Diese so gebildeten Stanznasen sind im Bereich des Verbinders so angeordnet, daß sie mit Begrenzungswandungen der beiden Langlöcher zusammenwirken können, wobei die beiden Langlöcher in dem plattenförmigen Grundkörper nach wie vor einen rechten Winkel miteinander einschließen.

Es empfiehlt sich, die Stanznasen in der Verlängerung je einer Begrenzungswand eines unrunden Durchbruches der Zwischenplatte liegenzulassen, wobei die beiden Begrenzungskanten des Durchbruches einen rechten Winkel miteinander einschließen.

Bei Befestigungskonsolen der infragekommenden Art wird der eine Grundkörper mit einem Befestigungswinkel der Raumwand und der andere Grundkörper mit dem Anschlußwinkel für einen Kabelkanal fest verbunden Dabei können zur Erzielung dieser festen Verbindung bekannte Mittel eingesetzt werden.

Was die Befestigung des einen Grundkörpers mit dem Anschlußwinkel für einen Kabelkanal angeht, so kann hier eine bereichsweise Verschweißung stattfinden.

Nach einem weiteren Vorschlag der Erfindung erhält dieser Anschlußwinkel mehrere Schlitze zum wahlweisen Einführen von Teilen einer als Schnappelement ausgebildeten Kupplung Die Kupplung weist dabei zweckmäßig wenigstens einen Hakenteil auf, deren Haken in der Befestigungslage in eine Rinne an der Außenseite des Bodens eines Kabelkanals eingreifen. Es empfiehlt sich dabei, die Kupplung als einstückigen Metallkörper auszubilden, der einen plattenförmigen Grundkörper aufweist, dessen um 90° abgebogenes oberes Ende Rasten hat, und dessen ebenfalls um 90° in dieselbe Richtung umgebogenes unteres Ende als mit einer Raste versehene Federzunge ausgebildet ist. Auf der gegenüberliegenden anderen Seite des Grundkörpers liegen Hakenteile, die mit dem plattenförmigen Grundkörper der Kupplung ebenfalls einen rechten Winkel einschließen, jedoch von den Längskanten des Grundkörpers vorstehen.

In dem einen Schenkel, vorzugsweise in dem breiteren Schenkel, des Anschlußwinkels sind die Schlitze, die mit den Kupplungen zusammenwirken sollen, in Längsrichtung der Schenkel liegend, hintereinander angeordnet; dadurch wird dem Benutzer die Möglichkeit gegeben, die Kupplung wahlweise mit einigen, der in größerer Anzahl vorhandenen Schlitze zusammenwirken zu lassen. Darüber hinaus ist erfindungsgemäß vorgesehen, die Kupplungen zunächst mit einigen der vorhandenen Schlitze zusammenwirken zu lassen, und zwar derart, daß die Kupplungen dabei eine Montagestellung einnehmen, die als Bereitschaftsstellung bezeichnet werden kann. In dieser Stellung kann die Befestigungsrinne des Kabelbodens widerstandslos einschwenken. Durch Druck in Schwenkrichtung können die Haken der Kupplung dann in der Rinne einhaken. In der Endlage des Kupplungselementes schnappt deren Federzunge hinter eine Kante des Grundkörpers.

Durch die Anordnung mehrerer Schlitze, die in Längsrichtung des einen Schenkels des Anschlußwinkels hintereinanderliegen, ist auch eine Anpassung an unterschiedlich dimensionierte Kabelkanäle möglich, d.h in Abhängigkeit von der Größe des anzuschließenden Kabelkanals können die Kupplungen in unterschiedliche Schlitze des Schenkels des Anschlußwinkels eingebracht werden.

Es empfiehlt sich, die Hakenteile der Kupplung, in Seitenansicht gesehen, etwa dreieckförmig zu gestalten, derart, daß die Spitze dieses Dreiecks jeweils in einen Haken ausläuft. Ein und demselben Grundkörper können dabei zweckmäßig zwei Hakenteile zugeordnet werden, die untereinander gleichgestaltet sind und jeweils an den längeren Seitenwandungen des Grundkörpers liegen, derart, daß sie mit der Ebene des Grundkörpers einen rechten Winkel miteinander einschließen.

Das eine Ende des großen Schenkels des Anschlußwinkels ist zweckmäßig zur Bildung eines Kopfteiles um 90° im Bezug auf die Schenkelebene umgebogen.

Auf der Oberseite dieses Kopfteiles ist eine als Aufhängnase ausgebildete Kupplung für den Kabelkanal angeordnet.

Dabei empfiehlt es sich, die Aufhängnase an der Außenseite eine Ausbuchtung des Kopfteiles des Schenkels des Anschlußwinkels anzuordnen und eine unterteilte Oberfläche aufweisen zu lassen.

Bei der vorgeschlagenen Ausbildung des Anschlußwinkels und der zugehörigen Kupplung ist bisher, vorausgesetzt, daß eine direkte Kupplung mit dem Boden des Kabelkanals durchgeführt wird. Dies setzt aber voraus, daß der Boden des Kabelkanals an seiner Außenseite liegend Rinnen od.dgl. aufweist, hinter die Teile der Kupplung greifen können. In der Praxis gibt es jedoch Kabelkanäle, bei denen der Boden an seiner Außenseite glatt gehalten ist. Bei diesen ist somit eine direkte Kupplung oder ein direktes Aufschnappen des Kabelkanals auf die Kupplung des Anschlußwinkels nicht möglich. Hier will die Erfindung ebenfalls Abhilfe schaffen. Sie will dafür sorgen, daß auch dann ein Aufschnappen des Kabelkanals auf die Kupplung eines Anschlußwinkels möglich ist, wenn der Boden des Kabelkanals an seiner Außenseite liegend keine Rinnen, Nuten od.dgl. aufweist. Um diese zusätzliche Aufgabe zu lösen, wird erfindungsgemäß vorgeschlagen, daß die als Schnappelement ausgebildete Kupplung mit einem Adapter verbindbar ist, der seinerseits mit einem der Wände des Kabelkanals vorzugsweise mit dessen Boden verbunden ist. Durch den zwischengeschalteten Adapter ist nunmehr auch ein Aufschnappen des Kabelkanals auf die Kupplung des Anschlußwinkels möglich, wenn der Boden des Kabelkanals glatt gehalten ist. Ein solcher Adapter kann durch grundsätzlich bekannte Befestigungselemente an der Außenseite des Bodens des Kabelkanals festgelegt werden. Als Befestigungselemente können dabei alle konventionellen Elemente, wie Schrauben, Muttern od. dgl. eingesetzt werden, darüber hinaus können aber auch Blindnieten, Bajonettverschlüsse oder ähnliche Verbindungen eingesetzt werden.

Bei einer bevorzugten Ausführungsform der Erfindung ist der Adapter ein vorzugsweise metallischer einstückiger Körper der einen dem lösbaren Anbringen der Kupplung dienenden Mittelteil und wenigstens einen seitlichen Befestigungsteil aufweist.

Es empfiehlt sich, daß der Mittelteil des Adapters hochgezogen und mit wenigstens zwei in Abstand voneinander angeordneten Durchbrechungen versehen ist, deren Begrenzungskanten mit Bereichen der Kupplungen des Anschlußwinkels zusammenwirken. Der Anschlußwinkel selbst kann dabei die schon geschilderten Ausbildung erhalten, d.h., er hat einerseits mehrere Schlitze zum wahlweisen Einführen von Teilen der Kupplung, deren Haken jedoch jetzt hinter eine der Begrenzungskanten einer Durchbrechung des Adapters greifen und andererseits ist eine weitere Kupplung vorhanden, die mit einer Begrenzungskante einer anderen Durchbrechung dieses Adapters zusammenwirkt.

Nach einem weiteren Vorschlag der Erfindung weist der Adapter wenigstens einen parallel zum Boden des Kabelkanals verlaufenden Befestigungsflansch auf, der mit einer Mehrzahl von Löchern versehen ist und an seinem Ende in eine Schrägwand übergeht, die über eine Umbiegestelle in den hochgezogenen Mittelteil ausläuft.

Dabei empfiehlt es sich, die dem Befestigungsflansch gegenüberliegende Seite des Adapters eine Schrägwand aufweisen zu lassen, die in eine Stirnfläche ausläuft.

Bei einer abgewandelten Ausführungsform der Erfindung weist die dem Befestigungsflansch gegenüberliegende Seite des Adapters ebenfalls einen parallel zum Boden des Kabelkanals verlaufenden Befestigungsflansch mit Durchbrüchen für Befestigungselemente zum Festlegen des Adapters am Kabelkanal auf.

Es empfiehlt sich, den Befestigungsflansch des Adapters mehrere vorzugsweise zwei kulissenartige Durchbrechungen aufweisen zu lassen.

Die kulissenartige Durchbrechung des Befestigungselementes hat zweckmäßig einen in Längsrichtung des Befestigungsflansches verlaufenden Mittelteil, der an seinen beiden Enden in einen quer verlaufenden Endteil übergeht.

Daneben ist es aber auch möglich, daß die kulissenartige Durchbrechung des Befestigungsflansches zusätzlich wenigstens einen Seitenteil aufweist, der in bezug auf die Endteile nach der entgegengesetzten Richtung verläuft.

Die beiden Durchbrechungen des Mittelteils des Adapters sind zweckmäßig in Draufsicht gesehen als Rechtecke ausgebildet, wobei ihre schmalen Seitenkanten als Begrenzungsanschlag benutzbar sind. Durch diese Begrenzungsanschläge ist eine Querbewegung nur im begrenzten Umfang möglich.

Sofern die Außenseite des Bodens eines Kabelkanals eine durchlaufende glatte Fläche aufweist, sind keine besonderen Vorkehrungen zu treffen, um beim Aufschnappen des Kabelkanals mit dem Adapter auf den Anschlußwinkel bzw. die Kupplung für einen Anschlag zur Bewegungsbegrenzung zu sorgen. Bereiche der Außenseite des Bodens selbst dienen in diesem Falle als Anschlag. Anders ist es dagegen, wenn Kabelkanäle vorliegen, bei denen ein Bereich des Bodens mit einer Vertiefung versehen ist. In diesem Falle empfiehlt es sich, den Adapter selbst einen Anschlag zuzuordnen, der der Bewegungsbegrenzung dient. Ein solcher Anschlag kann durch Teile des Adapters selbst gebildet werden, was die Herstellung vereinfacht.

In den Zeichnungen ist die Erfindung in mehreren Ausführungsbeispielen dargestellt und zwar zeigen:
- Fig. 1: in schaubildlicher Darstellung eine erfindungsgemäß ausgebildete Befestigungskonsole, die mit ihrem Befestigungswinkel an einer Wand festgelegt ist, wobei der von dem Anschlußwinkel aufzunehmende Kabelkanal sich noch in einer Bereitschaftslage befindet,
- Fig. 2: in explosionsartiger Darstellung und im vergrößertem Maßstab die Einzelteile der Befestigungskonsole vor ihrem Zusammenfügen,
- Fig. 3: in schaubildlicher Darstellung denjenigen plattenförmigen Grundkörper, der mit dem Anschlußwinkel der Befestigungskonsole fest verbunden ist, mit der zugeordneten Kupplung für den Anschlußkanal, wobei die Kupplung einerseits noch nicht mit dem Anschlußwinkel verbunden ist und andererseits von unterschiedlichen Seiten her dargestellt ist,
- Fig. 4: teils in Ansicht, teils im Schnitt und im vergrößerten Maßstab den Anschlußwinkel einer erfindungsgemäßen Befestigungskonsole, wobei sich der Kabelkanal in eine Montagestellung befindet und die Kupplungen noch nicht alle mit den zugehörigen Gegenkupplungen des Kabelkanals verbunden sind,
- Fig. 5: ebenfalls in Ansicht und teilweise im Schnitt den Anschlußwinkel nach Fig. 4, jedoch in derjenigen Lage, in der dieser mit dem Kabelkanal verbunden ist,
- Fig. 6: in schaubildlicher Darstellung ein weiteres Ausführungsbeispiel der erfindungsgemäß ausgebildeten Befestigungskonsole, die mit ihrem Befestigungswinkel an einer Wand festgelegt ist, wobei der von dem Anschlußwinkel aufzunehmende Kabelkanal sich noch in einer Bereitschaftslage befindet und zwischen dem Anschlußwinkel und dem Kabelkanal ein Adapter zwischengeschaltet ist,
- Fig. 8: in vergrößertem Maßstab und in Draufsicht eine abgewandelte Ausführungsform des Adapters nach der Fig. 6,
- Fig. 9: eine Seitenansicht des Adapters gemäß der Fig. 7 der Zeichnungen,
- Fig. 10: einen Schnitt durch einen Kabelkanal mit einem an dessen Boden befestigten Adapter,
- Fig. 11: eine weitere Ausführungsform des Kabelkanals, ebenfalls im Schnitt mit einem an seiner Außenseite befestigten Adapter,
- Fig. 12: eine dritte Ausführungsform eines Kabelkanals im Schnitt mit einem an der Außenseite des Bodens befestigten Adapter,
- Fig. 13: eine vierte Ausführungsform eines Kabelkanals, an dessen Bodenaußenseite ein Adapter befestigt ist,
- Fig. 14: in Draufsicht und in vergrößertem Maßstab eine dritte Ausführungsform eines erfindungsgemäßen Adapters,

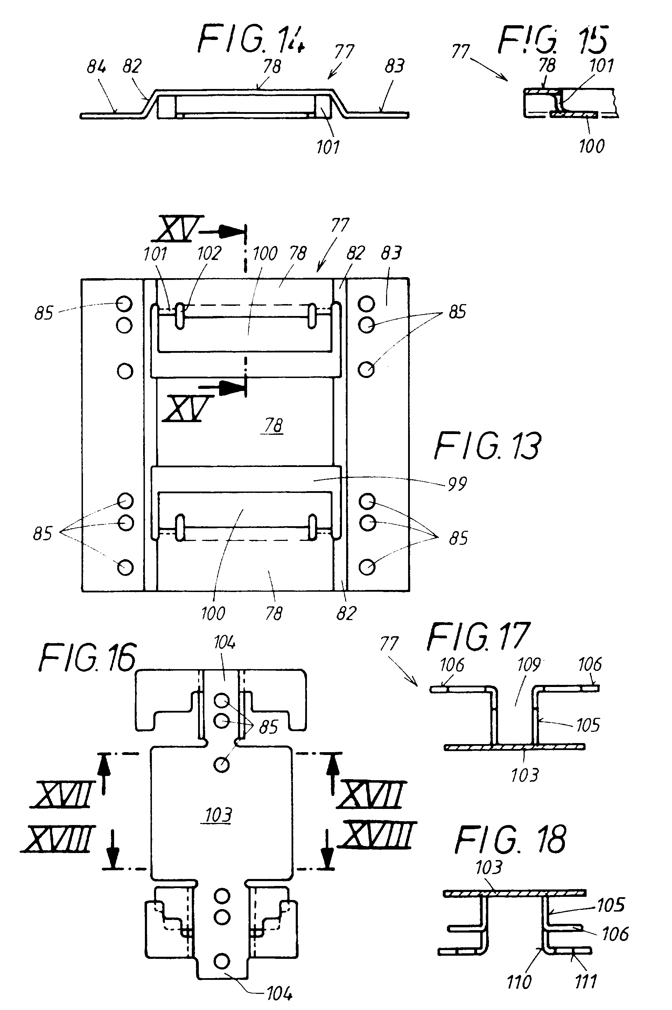

- Fig. 14: eine Seitenansicht des Adapters nach der Fig. 13,
- Fig. 15: einen Teilschnitt durch den Adapter nach der Fig. 13 entlang der Linie XV - XV der Fig. 13,
- Fig. 16: in Draufsicht und in vergrößertem Maßstab eine vierte Ausführungsform des erfindungsgemäßen Adapters,
- Fig. 17: einen Schnitt entlang der Linie XVII - XVII der Fig. 16,
- Fig. 18: einen weiteren Schnitt durch den Adapter gemäß der Fig. 16 entlang der Linie VXIII - XVIII und

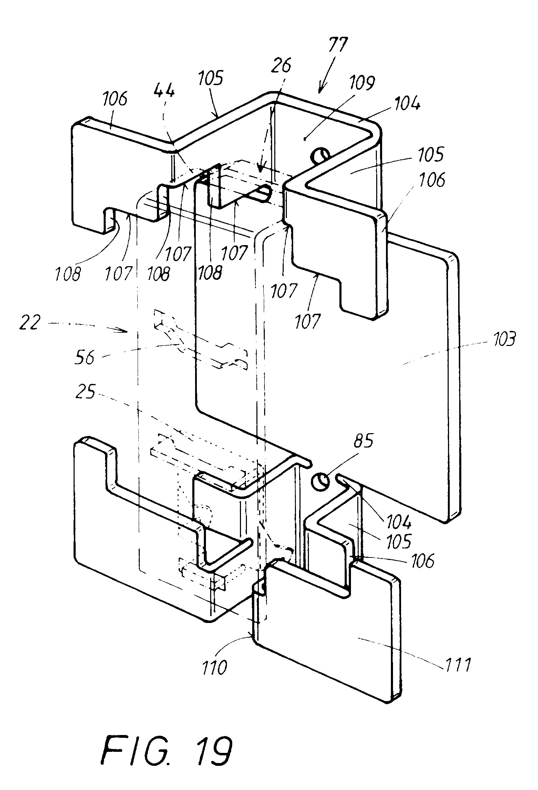

- Fig. 19: in schaubildlicher Darstellung den Adapter nach der Fig. 16 mit den strichpunktierten Linien wiedergegebenen Anschlußwinkeln.

Es sei zunächst erwähnt, daß in den Figuren der Zeichnungen nur diejenigen Teile einer Befestigungskonsole und der mit ihr zusammenwirken Einrichtungen wiedergegeben sind, welche für das Verständnis der Erfindung Bedeutung haben. So ist beispielsweise auf die zeichnerische Darstellung eines Konvektiongitterprofils und der damit zusammenwirkenden Gitterprofilhalter verzichtet, zumal diese in bekannter Weise ausgebildet sein können. Der mit der erfindungsgemäßen Befestigungskonsole zusammenwirkende Kabelkanal kann eine unterschiedliche Gestalt haben. In den Zeichnungen sind zwei an sich bekannte Ausführungsformen von Kabelkanälen wiedergegeben. Darüber hinaus sind die dargestellten Ausführungsformen des Kabelkanals nur als beispielhafte Ausführungsformen zu betrachten. Anstelle der beiden dargestellten Kabelkanäle können daher andere Kabelkanäle eingesetzt werden. Im übrigen gilt, daß alle in den Zeichnungen nicht dargestellten Teile eine grundsätzlich bekannte Ausbildung aufweisen können.

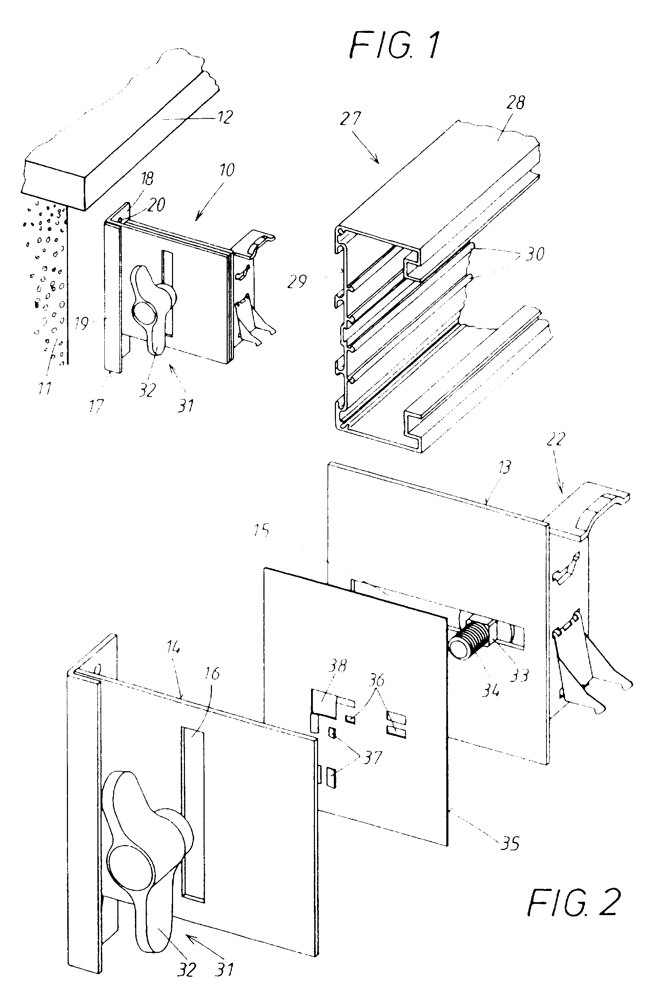

Die dem Ausführungsbeispiel nach den Fig. 1 bis 5 zugrundegelegte Befestigungskonsole ist generell mit 1o bezeichnet. Sie ist an einer aufrechten Wand 11 eines Raumes angebracht und zwar unterhalb einer mit 12 bezeichneten Fensterbank. Zu der erfindungsgemäßen Befestigungskonsole 1o gehören zwei plattenförmige Grundkörper 13 und 14, die untereinander gleich gestaltet sind. Im gewählten Ausführungsbeispiel handelt es sich bei dem plattenförmigen Grundkörper 13 um einen metallischen Körper, der in Draufsicht gesehen etwa eine quadratische Gestalt aufweist, wobei eine der Seitenwandungen, was in der Fig. 2 nicht dargestellt ist, auch an einer Seite abgewinkelt werden kann. Der plattenförmige Grundkörper 13 hat ein Langloch 15, das in Draufsicht gesehen die Gestalt eines Rechteckes hat, wobei die längeren und kürzeren Seitenwandungen des Rechtseckes jeweils einen rechten Winkel miteinander einschließen.

Der andere plattenförmige Grundkörper 14 hat ein Langloch 16, das jedoch wie Fig. 2 der Zeichnung erkennen läßt, eine senkrechte Anordnung aufweist.

Zur Herstellung der beiden plattenförmigen Grundkörper 13 und 14 ist nur einziges Herstellungswerkzeug erforderlich, was bedeutet, daß die beiden Grundkörper 13 und 14 untereinander gleich gestaltet sind. Sie werden jedoch in der in Fig. 2 wiedergegebenen Weise um 90 ° versetzt zueinander angeordnet. In dieser Lage überlappen sich die Langlöcher 15 und 16 der beiden Grundkörper 13 und 14. Durch diese versetzte Anordnung verläuft das eine Langloch - 15 - horizontal und das andere - 16 - vertikal sowie dies in der Fig. 2 der Zeichnungen wiedergegeben ist.

Zu der erfindungsgemäßen Befestigungskonsole gehört ein Feststeller, der generell mit 31 bezeichnet ist. Es handelt sich dabei um einen zentral angeordneten Feststeller 31, der aus einem Handgriff 32 und einem Verbinder besteht. Dieser Verbinder besteht aus mehreren nicht näher bezeichneten Teilen zu denen ein Kopf und ein unrunder Teil 33 gehört, der, wie die Fig. 2 erkennen läßt, in den Gewindeteil 34 übergeht. Der unrunde Teil 33 des zentralen Feststellers 31 ist so gestaltet, daß seine Abmessungen den Breitenabmessungen der Langlöcher 15 bzw. 16 der beiden plattenförmigen Grundkörper 13 bzw. 14 angepaßt ist.

Der vordere Teil des Verbinders ist mit dem Gewindeteil 34 ausgestaltet, derart, daß ein Verschrauben mit dem Handgriff 32 möglich ist. Durch Betätigen des Handgriffes 32 können die beiden plattenförmigen Grundkörper 13 und 14 der Befestigungskonsole 1o in einfachster Weise in einer gewollten gegenseitigen Lage fixiert werden. Dabei erfolgt jedoch, wie die Fig. 2 am besten erkennen läßt, nicht mehr wie bisher, eine direkte gegenseitige Anlage der beiden plattenförmigen Grundkörper 13 und 14 der Befestigungskonsole 1o, sondern zwischen diesen beiden plattenförmigen Grundkörpern befindet sich ein Verbinder 35. Dieser Verbinder ist erfindungsgemäß als Zwischenplatte ausgebildet, die nach diametral gegenüberliegenden Seiten aus der Grundebene vorrangende Nasen 36 bzw. 37 aufweist. Von diesen greifen die einen Nasen 36 in das Langloch 15 des Grundkörpers 13 und die anderen Nasen 37 in das Langloch 16 des Grundkörpers 14 der Befestigungskonsole 1o ein. Dies bedeutet, daß die plattenförmigen Grundkörper 13 bzw. 14 der Befestigungskonsole 1o unter Aufrechterhaltung der Möglichkeit der relativen gegenseitigen Verschiebung zueinander zusätzlich durch Teile des Verbinders 35 formschlüssig miteinander verbunden sind.

Zur wirtschaftlichen Herstellung der Zwischenplatte 35 und der hier zugeorneten Nasen 36,37 werden die Nasen 36 bzw. 37 als Stanznasen ausgebildet. Dies bedeutet, daß in der Grundebene der Platte 35 drei Seitenteile freigeschnitten und diese Teile dann nach unterschiedlichen Richtungen aus der Grundebene um 90 ° abgewinkelt werden, so daß dann die Nasen 36 und 37 entstehen, die dann mit den Langlöchern 15 bzw. 16 der plattenförmigen Grundkörper 13 und 14 zusammenwirken können.

Aus der Fig. 2 der Zeichnungen ist ersichtlich, daß die Stanznasen 36 bzw. 37 in der Verlängerung je einer Begrenzungswand eines unrunden Durchbruches 38 der Zwischenplatte 35 liegen. Dabei schließen die beiden Begrenzungskanten des Durchbruches 38 einen rechten winkel miteinander ein.

Im Gegensatz zu der bekannten Befestigungskonsole dieser Art erfolgt somit nicht nur eine kraftschlüssige Verbindung der plattenförmigen Grundkörper 13 und 14 miteinander, sondern zusätzlch eine formschlüssige, wobei zur Erzielung dieses Formschlusses die Zwischenplatte 35 mit den ihr zugeordneten Teilen herangezogen wird.

Wie die Fig. 1 der Zeichnungen erkennen läßt, ist der eine Grundkörper 14 mit einem Befestigungswinkel fest verbunden. Dabei wird der Befestigungswinkel 17 mit der aufrechten Wand 11 verbunden. Dazu können bekannte Befestigungselemente, z.B. Schrauben, Stifte od.dgl. herangezogen werden. Diese wirken mit einer Durchbrechung 20 zusammen, die in dem großen Schenkel 18 des winkelförmig gestalteten Befestigungswinkel 17 vorhanden sind. Der kleinere Schenkel des Befestigungswinkels ist dabei mit 19 bezeichnet.

Der andere Grundkörper 13 der Befestigungskonsole 1o ist dagegen vorzugsweise durch Schweißen mit dem Anschlußwinkel 22 für einen Kabelkanal 27 fest verbunden.

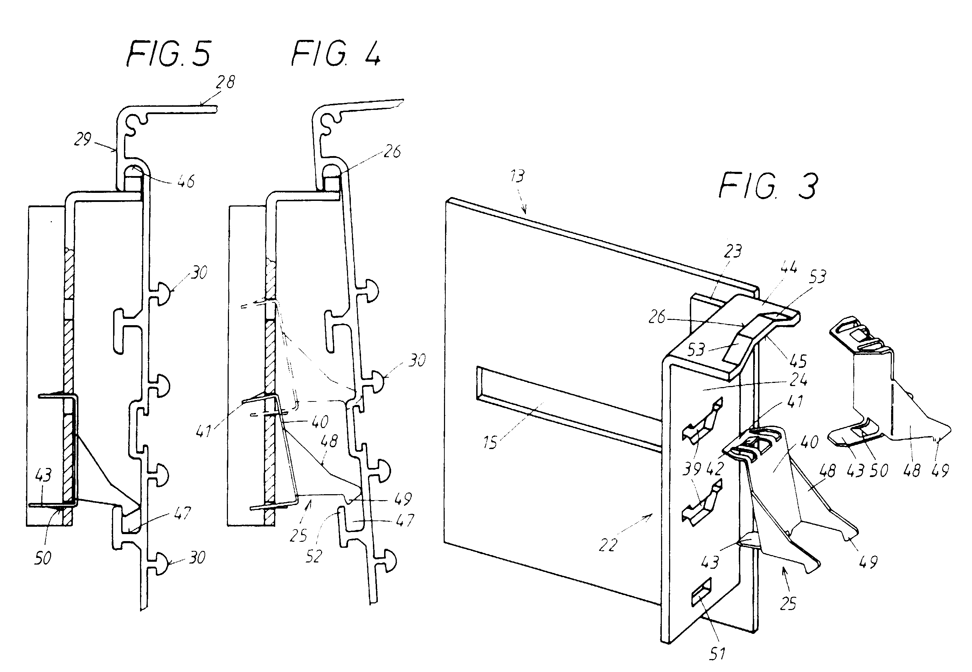

Wie aus der Fig. 3 der Zeichnung am besten erkennbar ist, hat der Anschlußwinkel 22 einen kleinen Schenkel 23 und einen größeren Schenkel 24; dabei ist der kleinere Schenkel 23 fest mit dem plattenförmigen Grundkörper 13, beispielsweise durch Verschweißen, fest verbunden. In dem großen Schenkel 24 des Anschlußwinkels 22 sind mehrere Schlitze 39 zum wahlweisen Einführen von Teilen einer als Schnappelement ausgebildeten Kupplung 25 vorgesehen. Der größere Schenkel 24 des Anschlußwinkels 22 weist somit eine Mehrzahl von Schlitzen 39 auf, die in Längsrichtung des Schenkels 24 gesehen hintereinander liegen. Unterhalb der Schlitze 39 ist noch ein weiterer Schlitz 51 vorgesehen.

Mit den Schlitzen 39 bzw. 51 des Schenkels 24 des Anschlußwinkels 22 wirkt eine generell mit 25 bezeichnete Kupplung zusammen. Wie die Fig. 3 der Zeichnungen am besten erkennen läßt, ist diese Kupplung 25 als einstückiger Metallkörper ausgebildet, der einen plattenförmigen Grundkörper 4o aufweist, dessen um 90 ° abgebogenes oberes Ende 41 Rasten 42 hat. Das untere Ende des Grundkörpers 4o der Kupplung 25 ist ebenfalls um 90 ° in dieselbe Richtung umgebogen. Dieses untere Ende ist als Federzunge 43 ausgebildet, die mit einer Rast 5o versehen ist. Auf der gegenüberliegenden anderen Seite des Grundkörpers 4o liegen Hakenteile 48, die mit dem plattenförmigen Grundkörper 4o der Kupplung 25 ebenfalls einen rechten Winkel einschließen, jedoch von den Längskanten des Grundkörpers 4o vorstehen. In Seitenansicht gesehen ist der Hakenteil 48 etwa dreieckförmig gestaltet, derart, daß die Spitze dieses Dreiecks jeweils in einen Haken 49 ausläuft. Die Kupplung 25 kann als einstückiger Metallkörper ausgebildet sein, wobei dann durch unterschiedliches Umbiegen dieser Metallkörper die in der Fig. 3 wiedergebene Endlage erhält.

Das in der Fig. 3 obere Ende des Schenkels 24 des Anschlußwinkels 22 ist zur Bildung eines Kopfteiles 44 um 90 ° in bezug auf die Schenkelebene umgebogen. Auf der Oberseite dieses Kopfteiles 44 ist eine als Aufhängnase 26 ausgebildete Kupplung für den Kabelkanal 27 angeordnet. In den Fig. 1, 4 und 5 der Zeichnungen ist ein Ausführungsbeispiel des Kabelkanals 27 wiedergegeben. Es handelt sich dabei im wesentlichen um einen Kabelkanal 27 mit einem im Querschnitt U-förmigen Unterteil. Der die obere Öffnung dieses U's abschließende Deckel ist in den Figuren der Zeichnungen der Einfachheit halber fortgelassen. Der Unterteil des Kabelkanals 27 hat hochgezogene und parallel zueinanderverlaufende Seitenwandungen 28. An den oberen Enden dieser Seitenwandungen sind Kupplungen vorgesehen, die der Verbindung mit dem nicht dargestellten Deckel dienen. Auf der Innenseite des Bodens 29 des Kabelkanals 27 sind durchlaufende Leisten 3o vorhanden, die zum Festlegen von elektrischen Installationseinrichtungen, Trennwänden od.dgl dienen. Sowohl die dazu benutzten Installationsgeräte als auch die Trennwände, als auch die dazu benutzten Kupplungsmittel sind bekannt, so daß auf ihre zeichnerische Darstellung verzichtet ist.

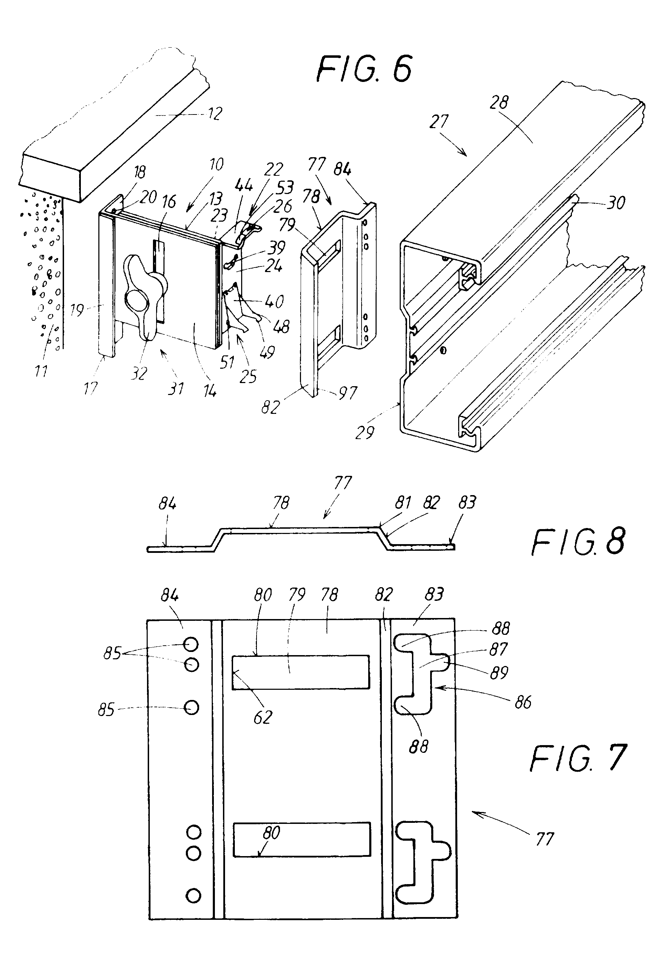

An der Außenseite des Bodens 29 des Kabelkanals 27 sind mehrere Befestigungsrinnen 46 bzw. 47 vorhanden. Von diesen wirkt die Rinne 46 mit der Kupplung 26 auf der Oberseite des Kopfteiles 44 des Schenkels 24 des Anschlußwinkels 22 zusammen. Die andere Rinne 47 dient dagegen der Herstellung einer Verbindung mit den Begrenzungswandungen der Haken 49. Dabei wirkt in der Endlage des Zusammenkuppelns der Haken 49 mit einer der Begrenzungswandungen der Rinne 47 zusammen, so, wie dies in der Fig. 5 der Zeichnungen wiedergegeben ist.

In der Fig. 4 der Zeichnungen befindet sich die Kupplung 25 in einer Montage bzw. Bereitschaftsstellung. Es sind in dieser Fig. 4 insgesamt zwei alternative Positionen dargestellt. Die eine ist in ausgezogenen Linien und die andere in strichpunktierten Linien wiedergegeben. Aus dieser Montage- bzw. Bereitschaftsstellung ergibt sich, daß die Rinne 46 an dem Boden 29 des Kabelkanals 27 bereits wirksam ist. Dies bedeutet, daß der Kabelkanal bereits mit der Kupplung 26 des Anschlußwinkels 22 zusammenwirkt. Jedoch ist das Zusammenwirken derart, daß in der in Fig. 4 gezeigten Stellung die Befestigungsrinne des Bodens 26 des Kabelkanals 27 widerstandslos eingeschwenkt werden kann. Durch Druck in Schwenkrichtung können die Haken 49 der Kupplung 25 in die andere Rinne 47 des Bodens 29 des Kabelkanals 27 einhaken. Zugleich schnappt die Federzunge 43 mit ihrer Rast 5o hinter eine Kante des Anschlußwinkels 22 so, wie dies in der Fig. 5 dargestellt ist. Aus der gleichen Figur ist auch ersichtlich, daß die Rasten 42 des umgebogenen oberen Endes 41 des Rundkörpers 4o der Kupplung 25 hinter Begrenzungswandungen des einen Schlitzes 39 greifen. Durch die genannte Verbindung zwischen der Kupplung 25 mit dem Anschlußwinkel 22 einerseits und dem Kabelkanal 27 andererseits ergibt sich eine leicht herzustellende, dabei aber eine formstabile Verbindung zwischen dem Anschlußwinkel 22 und dem daran festzulegenden Kabelkanal 27.

In der Fig. 6 der Zeichnungen ist eine weitere Ausführungsform einer erfindungsgemäßen Befestigungskonsole für Kabelkanäle wiedergegeben. Bei der in Fig. 6 dargestellten Ausführungsform des Kabelkanals 27 ist eine direkte Verbindung zwischen dem Anschlußwinkel 22 und dem Kabelkanal 27 nicht möglich und zwar deshalb nicht, weil der Kabelkanal nach der Fig. 6 im Bereich seines Bodens 29 keine Rinnen 46 bzw. 47 aufweist. Es fehlen daher im Bereich des Bodens 29 des Kabelkanals 27 nach der Fig. 6 die Mittel, hinter denen die wirksamen Teile der Kupplung 25 des Anschlußwinkels 22 angreifen könnten. Um auch bei der Ausführungsform des Kabelkanals 27 nach der Fig. 6 der Zeichnungen eine Schnappverbindung mit dem Anschlußwinkel herstellen zu können, ist nach einem weiteren Vorschlag der Erfindung die als Schnappelement ausgebildete Kupplung 25 mit einem generell mit 77 bezeichneten Adapter verbindbar, der seinerseits mit einer der Wände des Kabelkanals 27 vorzugsweise mit dessen Boden 29 verbunden ist. Auf die zeichnerische Darstellung der Verbindung des Adapters 77 mit dem Boden 29 des Kabelkanals 27 nach der Fig. 6 der Zeichnung ist verzichtet. Es sei jedoch erwähnt, daß der Adapter 77 mit allen in der einschlägigen Technik bekannten Verbindungselementen mit dem Boden 29 des Kabelkanals 27 verbunden werden kann. Dazu gehören Schrauben, Muttern ebenso wie Blindnieten oder Bajonettverschlüsse.

Der in der Fig. 6 dargestellte Adapter 77 ist ein metallischer einstückiger Körper, der einen dem lösbaren Anbringen der Kupplung 25 dienenden Mittelteil 78 und einen seitlichen Befestigungsteil 84 aufweist. Der Mitteilteil 78 des Adapters 77 ist hochgezogen und mit wenigstens zwei im Abstand voneinander angeordneten Durchbrechungen 79 versehen. Jede Durchbrechung 79 ist in dem gewählten Ausführungsbeispiel rechteckig gestaltet, wobei die längeren Begrenzungskanten 8o mit Bereichen der Kupplungen 25 bzw. 26 des Anschlußwinkels 22 zusammenwirken.

Beim Betrachten der in explosionsartiger Darstellung in der Fig. 6 wiedergegebenen Teile ergibt sich, daß der Anschlußwinkel 22 einerseits mehrere jetzt mit 56 bezeichnete Schlitze zum wahlweisen Einführen von Teilen der Kupplung 25 aufweist, deren Haken 55 hinter eine der Begrenzungskanten 8o einer der Durchbrechungen 79 des Adapters 77 greifen. Andererseits ist eine weitere Kupplung 26 vorhanden, die mit einer Begrenzungskante 8o in einer anderen Durchbrechung 79 dieses Adapters 77 zusammenwirkt.

Was die Ausbildung der übrigen Teile der Befestigungskonsole 1o angeht, so sind die Bezugszeichen aus der Fig. 1 und 2 in die Fig. 6 übernommen. Daraus ergibt sich, daß die Kupplung 25 nach wie vor als einstückiger Metallkörper ausgebildet ist, welcher einen plattenförmigen Grundkörper 4o aufweist, dessen oberes Ende dieser Schenkel gehen in Außenabwinklungen 66 über, die nach unterschiedlichen Richtungen weisen. Die Außenabwinklungen 66, vergleiche dazu die Fig. 14, haben sowohl Abstufungen 67 als auch Schultern 68. Die Abstufungen 67 sind aber horizontal, die Schultern 68 vertikal angeordnet.

Auch der untere Befestigungsendteil 64 des Adapters 37 hat Schenkel 65 mit Außenabwinklungen 66, jedoch ist in diesem Falle ein Teilbereich des Schenkel 65 mit einer Verlängerung 70 versehen. Diese ist nach außen am Ende des Schenkels 65 liegend abgewinkelt, wobei die Verlängerungen 7o nach unterschiedlichen Richtungen zeigen und parallel und im Abstand zu der Außenabwinklung 66 angeordnet sind.

Die Fig. 14 zeigt, daß auch die Abwinklung 71 Schultern 68 und Abstufungen 67 aufweist.

In der Fig. 14 ist im übrigen dargestellt, wie der Anschlußwinkel 22 und die ihm zugeordneten Teile mit dem Adapter 37 zusammenwirken. Dabei ist der Anschlußwinkel 22 in strichpunktierten Linien wiedergegeben.

Wie bereits erwähnt, sind die dargestellten Ausführungen nur beispielsweise Verwirklichungen der Erfindung und diese nicht darauf beschränkt. vielmehr sind noch mancherlei andere Ausführungen und Anwendungen möglich. Dies gilt insbesondere für die Gestalt und die Anordnung des Adapters, der an einer im wesentlichen glattwandigen Außenseite des Bodens eines Kabelkanals 27 festgelegt wird. Dabei können sowohl die Mittelteile als auch die Befestigungsflansche eines solchen Adapters abweichende Gestalt von den in den Figuren gezeigten Ausführungsformen erhalten. Dies gilt auch für die Durchbrüche, die in den Befestigungsflanschen vorhanden sind, um den Adapter 37 fest mit der Außenseite des Bodens 29 des Befestigungsflansches verbinden zu können. Im übrigen können auch andere als die dargestellten Kabelkanäle 27 benutzt werden. Auf diese Weise ist auch dann ein Aufschnappen des Kabelkanals 27 gewährleistet, wenn er einen im wesentlichen glattwandigen Boden 29 aufweist. Das Aufschnappen gewährleistet dabei der mit dem Boden 29 des Kabelkanals 27 fest verbundene Adapter 77.

Bei einer weiteren Ausführungsform des Adapters 77 nach den Fig. 7 und 8 der Zeichnungen weist dieser wenigstens einen parallel zum Boden 29 des Kabelkanals 27 verlaufenden Befestigungsflansch 84 auf.

Dieser ist mit einer Mehrzahl von Löchern 85 versehen, durch die bekannte Befestigungselemente hindurchgreifen können, die den Adapter 77 an der Außenseite des Bodens 29 des Kabelkanals 27 festlegen.

Beim Ausführungsbeispiel des Adapters nach der Fig. 6 der Zeichnung geht der Befestigungsflansch 84 an seinem rückwärtigen Ende in eine Schrägwand 82 über. Die Übergangsstelle ist dabei die Umbiegestelle 81. An diese schließt sich ein hochgezogener Mittelteil 78 an, der die Durchbrechungen 79 aufweist.

Bei der Ausführungsform des Adapters 77 nach der Fig. 6 der Zeichnungen läuft die dem Befestigungsflansch 84 gegenüberliegende Seite des Adapters 77 über eine Schrägwand 82 in eine Stirnfläche 97 aus, das heißt, in diesem Falle hat der Adapter 77 nur einen einzigen Befestigungsflansch 84.

Im Gegensatz dazu hat die zweite Ausführungsform des Adapters 77, die in den Fig. 7 und 8 der Zeichnungen wiedergegeben ist, zwei Befestigungsflansche. Der ebenfalls einstückig aus einem metallischen Werkstoff gefertigte Adapter 77 nach den Fig. 7 und 8 der Zeichnungen hat somit an beiden Seiten einen Befestigungsflansch. Die beiden Befestigungsflansche sind dabei mit 83 und 84 bezeichnet. Beide Befestigungsflansche 83 und 84 sind parallel zum Boden 29 des Kabelkanals 27 angeordnet. Sie haben Durchbrüche für Befestigungselemente zum Festlegen des Adapters 77 am Kabelkanal 27, jedoch in unterschiedlicher Ausbildung, wie dies am besten die Fig. 7 der Zeichnungen erkennen läßt.

Der eine Befestigungsflansch 84 ist mit einer Vielzahl vom im Querschnitt kreisförmigen Löchern 85 versehen. Der gegenüberliegende andere Befestigungsflansch hat dagegen im gewählten Ausführungsbeispiel zwei kulissenartige Durchbrechungen 86. Im dargestellten Ausführungsbeispiel hat jede kulissenartige Durchbrechung 86 des Befestigungselementes 83 einen in Längsrichtung verlaufenden Mittelteil 87. Dieser geht an seinen beiden Enden in einen quer dazu verlaufenden Endteil 88 über. Darüber hinaus zeigt die Fig. 7, daß die kulissenartige Durchbrechung 86 des Befestigungsflansches 83 zusätzlich wenigstens einen Seitenteil 89 aufweist, der im Bezug auf die Endteile 88 nach der entgegengesetzten Richtung verläuft.

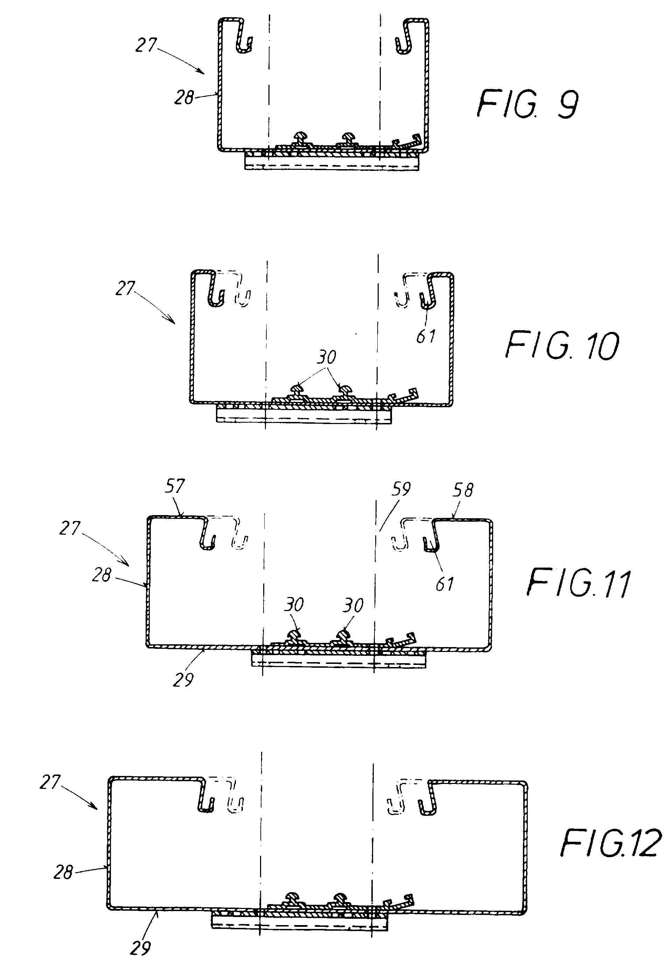

In den Fig. 9 bis 12 der Zeichnungen sind mehrere, an sich bekannte Ausführungsformen von Kabelkanälen 27 wiedergegeben. Bei diesen Ausführungsbeispielen des Kabelkanals 27 handelt es sich um metallische Ausführungsformen, die einen völlig glattwandigen Boden 29 aufweisen. Die Abmessungen und die Einführungsöffnung 35 der dargestellten Kabelkanäle 27 sind unterschiedlich bemessen. Dabei gilt jedoch in allen Fällen, daß die Öffnung 59 jeweils von zwei Teildecken 57 und 58 begrenzt ist. Diese Teildecken 57 und 58 verlaufen parallel zum Boden 29 des Kabelkanals 27.

In allen vier Ausführungsformen des Kabelkanals 27 gemäß den Fig. 9 bis 12 der Zeichnungen ist an der Außenseite des Bodens 29 jeweils ein Adapter 77 befestigt. Die Befestigung geschieht dabei unter Benutzung an sich bekannter Verbindungselemente. Sie wird so vorgenommen, daß die Anordnung des Adapters 77 an der Außenseite des Bodens 29 des Kabelkanals 27 derart erfolgt, daß eine symmetrische Anordnung im Bezug auf die Öffnung 59 des Kabelkanals 27 vorhanden ist - vergleiche dazu die nicht näher bezeichneten strichpunktierten Linien in den Fig. 9 bis 12 der Zeichnungen -.

Soweit es die Ausführungsform des Kabelkanals 27 nach den Fig. 9 bis 12 angeht, bereitet das Zusammenkuppeln des Kabelkanals 27 mit dem Anschlußwinkel 22 keine Schwierigkeiten. Dies deshalb, weil Teile des Anschlußwinkels 22 bwz. der ihm zugeordneten Kupplungen 25 an dem Boden 29 des Kabelkanals 27 selbst einen Anschlag finden. Durch diesen Anschlag wird die Bewegung begrenzt.

Bei Kabelkanälen 27, wie in der Fig. 6 der Zeichnung dargestellt, - also bei solchen, die mit einer Vertiefung ausgerüstet sind - kann es beim Aufschnappen des Kabelkanals 27 auf den Anschlußwinkel 22 zu Schwierigkeiten kommen, weil im Bereich der Vertiefung ein Anschlag für Bereiche der Kupplung des Anschlußwinkels fehlt. Um hier Abhilfe zu schaffen, sind in den Fig. 13 bis 19 zwei weitere Ausführungsformen eines Adapters 37 wiedergegeben. Diese unterscheiden sich von den Ausführungen nach den Fig. 1 bis 7 dadurch, daß dem Adapter 77 mindestens ein Abstützflansch 100 für den Anschlußwinkel 22 zugeordnet ist. Dieser Abstützflansch 100 dient somit zur Begrenzung der Bewegung von Teilen der Kupplung 25 beim Aufschnappen des Kabelkanals 27 auf den Anschlußwinkel 22.

Bei der Ausführungsform eines solchen Adapters 77 gemäß den Fig. 13 bis 15 der Zeichnungen weist der Adapter 77 einen, in drei voneinander getrennte Bereiche aufgeteilten Mittelteil 78 auf. zwischen zwei Bereichen ist jeweils ein fensterartiger Durchbruch 99 und der erwähnte, jedoch höher versetzte Abschlußflansch 100 angeordnet. Die drei Bereiche des Mittelteils 78 sind unterschiedlich breit gehalten, wie dies die Fig. 13 am besten erkennen läßt.

Die Fig. 14 zeigt, daß die an der Außenseite des Adapters 77 liegenden Bereiche des Mittelteils 78 zwei Verbindungsarme 101 aufweisen, die an ihrem anderen Ende in den senkrecht zu ihnen verlaufenden Abstützflansch 100 übergehen.

Zwischen der Oberseite des Abschlußflansches 100 und der Unterseite des zugehörigen Mittelbereiches 78 verbleibt ein Spalt, dessen Höhe der der Kupplung 26 des Anschlußwinkels 22 angepaßt ist. Auf diese weise ist eine Lagefixierung der Kupplung 26 beim Aufschnappen des Kabelkanals 27 erreicht.

Sowohl der Abstützflansch 100 als auch der zugehörige Mittelbereichsteil 78 des Adapters 77 weisen einseitig, neben dem Verbindungsarm 101 liegend, einen Freischnitt 102 auf. Im übrigen sind bei der Ausführungsform des Adapters 77 nach den Fig. 13 bis 15 in den Befestigungsflanschen 83 und 84 lediglich Löcher 85 zum Durchgriff von Befestigungselementen vorgesehen.

In den Fig. 15 bis 19 der Zeichnungen ist eine weitere Ausführungsform des Adapters 77 dargestellt, der - was für alle übrigen Adapterausführungsformen gilt - einstückig aus einem metallischen Werkstoff gefertigt ist.

Bei der Ausführungsform des Adapters 77 nach den Fig. 15 bis 19 weist dieser Adapter 77 mehrere, im Abstand voneinander liegende Befestigungsbereiche 103 und 104 auf. Diese Befestigungsbereiche 103 und 104 haben im Querschnitt gesehen kreisförmige Durchbrüche bzw. Löcher für Befestigungselemente. Diese dienen dem Festlegen des Adapters 77 an der Außenseite des Bodens 29 des Kabelkanals 27. Von diesen Befestigungsbereichen 103 bzw. 104 ist der in der Mitte liegende 103 in Draufsicht gesehen als quadratische Platte ausgebildet. Die beiden Befestigungsteile 104, die am Ende des Adapters 77 liegen, weisen jeweils einen Freiraum 109 zur Unterbringung von Bereichen des Anschlußwinkels 22 bzw. der Kupplung 26 auf.

Der obere Befestigungsteil 104 des Adapters 77 weist zur Bildung dieses Freiraumes 109 parallel und im Abstand voneinanderliegende Schenkel 105 auf. Die freien Enden dieser Schenkel gehen in Außenabwinklungen 106 über, die nach unterschiedlichen Richtungen weisen. Die Außenabwinklungen 66 - vergleiche dazu die Fig. 19 der Zeichnungen - haben sowohl Abstufungen 107 als auch Schultern 108. Die Schultern 107 sind dabei horizontal, die Schultern 108 dagegen vertikal angeordnet.

Auch der untere Befestigungsendteil 104 des Adapters 77 hat Schenkel 105 mit Außenabwinklungen 106. Jedoch ist in diesem Falle ein Teilbereich der Schenkel 105 mit einer verlängerung 110 versehen. Diese ist nach außen am Ende des Schenkels 105 liegend abgewinkelt. Dabei zeigen die Verlängerungen 110 nach unterschiedlichen Richtungen. Sie sind parallel und im Abstand zu der Außenabwinklung 106 angeordnet.

Die Fig. 19 der Zeichnungen läßt ferner erkennen, daß auch die unteren Verlängerungen 110 Schultern 108 und Abstufungen 107 aufweisen.

In der Fig. 19 ist im übrigen dargestellt, wie der Anschlußwinkel 22 und die ihm zugeordneten Teile mit dem Adapter 77 zusammenwirken. Dabei ist der Anschlußwinkel 22 in der Fig. 19 in strichpunktierten Linien wiedergegeben.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Dies gilt insbesondere für die Gestalt und die Anordnung des Adapters und des Anschlußwinkels. Sowohl die Mittelteile als auch die Befestigungsflansche eines solchen Adapters 77 können eine abweichende Gestalt von den in den Figuren gezeigten Ausführungsformen erhalten. Dies gilt auch für die Durchbrüche, die in den Befestigungsflanschen des Adapters vorhanden sind, um ihn fest mit der Außenseite des Bodens 29 des Befestigungsflansches verbinden zu können. Im übrigen können auch andere als die dargestellten Kabelkanäle 27 bei der Auswertung der Erfindung benutzt werden.

## Patentansprüche

1. Befestigungskonsole (10) für Kabelkanäle (27), wie Brüstungskanäle, an einer Wand od.dgl., bestehend aus zwei plattenförmigen Grundkörpern (13,14), deren gegenseitige Lage unter Benutzung von Verstelleinrichtungen veränderbar ist, und die einerseits einen an der Wand od.dgl. anzubringenden Befestigungswinkel (17) andererseits einen Anschlußwinkel (22) für den Kabelkanal (27) aufweisen, wobei die beiden plattenförmigen Grundkörper (13, 14) der Befestigungskonsole (10) untereinander gleichgestaltet sind und einen einzigen zentralen Feststeller (31) aufweisen, und daß jeder der beiden plattenförmigen Grundkörper (13,14) ein Langloch (15,16) aufweist, und daß diese Grundkörper um 90° versetzt zueinander angeordnet sind, derart, daß sich ihre Langlöcher (15,16) überlappen, und daß der zentrale Feststeller (31) beide Langlöcher der beiden Grundkörper durchgreift,
**dadurch gekennzeichnet**,
daß die plattenförmigen Grundkörper (13 bzw. 14) der Befestigungskonsole (1o) unter Aufrechterhaltung der Möglichkeit der relativen gegenseitigen Verschiebung zueinander zusätzlich durch Teile eines Verbinders formschlüssig miteinander verbunden sind, wobei der Verbinder der plattenförmigen Grundkörper (13 bzw. 14) als Zwischenplatte (35) ausgebildet ist, die nach diametral gegenüberliegenden Seiten aus der Grundebene vorragende Nasen (36 bzw. 37) aufweist, von denen die einen Nasen (36) in das Langloch (15) des Grundkörpers (13) und die anderen Nasen (37) in das Langloch (16) des Grundkörpers (14) der Befestigungskonsole (1o) eingreifen.

2. Befestigungskonsole nach Anspruch 1, dadurch gekennzeichnet, daß die Nasen (36 bzw. 37) der Zwischenplatte (15) als Stanznasen ausgebildet sind.

3. Befestigungskonsole nach den Ansprüchen 1 bis 2, dadurch gekennzeichnet, daß die Stanznasen (36 bzw. 37) in der Verlängerung je einer Begrenzungswand eines unrunden Durchbruches (38) der Zwischenplatte (35) liegen, wobei die beiden Begrenzungskanten des Durchbruches (38) einen rechten Winkel miteinander einschließen.

4. Befestigungskonsole nach einem oder mehreren der vorangehenden Ansprüche, bei der der eine Grundkörper mit einem Befestigungswinkel der Raumwand und der andere Grundkörper mit dem Anschlußwinkel für einen Kabelkanal fest verbunden ist, dadurch gekennzeichnet, daß der Anschlußwinkel (22) mehrere Schlitze (39) zum wahlweisen Einführen von Teilen (41 bzw. 43) einer als Schnappelement ausgebildeten Kupplung (25) aufweist, und daß die Kupplung (25) wenigstens einen Hakenteil (48) aufweist, deren Haken (49) in der Befestigungslage in eine Rinne (47) an der Außenseite des Bodens (29) eines Kabelkanals (27) eingreifen (Fig. 4 und 5).

5. Befestigungskonsole nach Anspruch 4, dadurch gekennzeichnet, daß die Kupplung (25) als einstückiger Metallkörper ausgebildet ist, der einen plattenförmigen Grundkörper (40) aufweist, dessen um 90° abgebogenes oberes Ende (41) Rasten (42) aufweist und dessen ebenfalls um 90° in dieselbe Richtung umgebogenes unteres Ende als mit einer Raste (50) versehene Federzunge (43) ausgebildet ist, und daß auf der gegenüberliegenden Seite des Grundkörpers (40) die Hakenteile (48) liegen, die mit dem plattenförmigen Grundkörper (40) der Kupplung (25) ebenfalls einen rechten Winkel einschließen, jedoch von den Längskanten des Grundkörpers (40) vorstehen (Fig. 3).

6. Befestigungskonsole nach Anspruch 5, dadurch gekennzeichnet, daß die Hakenteile (48) in Seitenansicht gesehen etwa dreieckförmig gestaltet sind, derart, daß die Spitze dieses Dreiecks jeweils in den Haken (49) ausläuft.

7. Befestigungskonsole nach den Ansprüchen 4 bis 6, dadurch gekennzeichnet, daß der größere Schenkel (24) des Anschlußwinkels (22) eine Mehrzahl von Schlitzen (39 bzw. 51) aufweist, die wahlweise mit den umgebogenen vorsprüngen (41 bzw. 43) des Grundkörpers (40) der Kupplung (25) zusammenwirken (Fig. 4).

8. Befestigungskonsole nach den Ansprüchen 4 bis 7, dadurch gekennzeichnet, daß die Kupplung (25) eine Montage- bzw. Bereitschaftsstellung einnimmt, in der eine Befestigungsrinne (46) des Bodens (29) des Kabelkanals (27) mühelos einschwenkbar ist und daß durch in Schwenkrichtung erfolgende Druckeinwirkung die Haken (47) des Hakenteiles (48) in eine weitere Rinne (47) des Bodens (29) des Kabelkanals (27) einhaken, und daß in der Endlage der Kupplung (25) die Raste (50) der Federzunge (43) hinter die Begrenzungskante des Schlitzes (51) des Schenkels (24) des Anschlußwinkels (22) schnappt.

9. Befestigungskonsole nach einem oder meheren der Ansprüche 4 bis 8, dadurch gekennzeichnet, daß das eine Ende des großen Schenkels (24) des Anschlußwinkels (22) zur Bildung eines Kopfteiles (44) um 90° in bezug auf die Schenkelebene umgebogen ist und daß auf der Oberseite dieses Kopfteiles (44) eine als Aufhängnase (26) ausgebildete Kupplung für den Kabelkanal (27) angeordnet ist.

10. Befestigungskonsole nach Anspruch 9, dadurch gekennzeichnet, daß die Aufhängnase (26) an der Außenseite einer Ausbuchtung (45) des Kopfteiles (44) des Schenkels (24) des Anschlußwinkels (22) angeordnet ist und eine unterteilte Oberfläche (53) aufweist (Fig. 3).

11. Befestigungskonsole nach Anspruch 1 und 4, dadurch gekennzeichnet, daß die als Schnappelement ausgebildete Kupplung (25) mit einem Adapter (77) verbindbar ist, der seinerseits mit einer der Wände des Kabelkanals (27) vorzugsweise mit dessen Boden (29) verbunden ist.

12. Befestigungskonsole nach Anspruch 11, dadurch gekennzeichnet, daß der Adapter (77) ein vorzugsweise metallischer einstückiger Körper ist, der einen dem lösbaren Anbringen der Kupplung (25) dienenden Mittelteil (78) und wenigstens einen seitlichen Befestigungsteil (84) aufweist.

13. Befestigungskonsole nach Anspruch 11 und 12, dadurch gekennzeichnet, daß der Mittelteil (78) des Adapters (77) hochgezogen und mit wenigstens zwei in Abstand voneinander angeordneten Durchbrechungen (79) versehen ist, deren Begrenzungskanten (80) mit Bereichen der Kupplungen (25 bzw. 26) des Anschlußwinkels (22) zusammenwirken.

14. Befestigungskonsole nach Anspruch 13, dadurch gekennzeichnet, daß der Anschlußwinkel (22) einerseits mehrere Schlitze (39) zum wahlweisen Einführen von Teilen der Kupplung (25) aufweist, deren Haken (49) hinter eine der Begrenzungskanten (80) einer Durchbrechung (79) des Adapters (77) greifen und andererseits eine weitere Kupplung (26) hat, die mit einer Begrenzungskante (80) einer anderen Durchbrechung (79) dieses Adapters (77) zusammenwirkt.

15. Befestigungskonsole nach den Ansprüchen 13 und 14, dadurch gekennzeichnet, daß die Kupplung (25) als einstückiger Metallkörper ausgebildet ist, welcher einen plattenförmigen Grundkörper (40) aufweist, dessen oberes Ende um 90° abgebogen und als Hakenteil (48) ausgebildet ist, während sein unteres Ende in der gleichen Richtung abgebogen, jedoch als mit einer Raste versehene Federzunge gestaltet ist und daß auf der gegenüberliegenden Seite des Grundkörpers (50) Hakenteile (48) liegen, deren Haken (49) hinter Begrenzungskanten (80) einer Durchbrechung (79) des Adapters (77) greifen.

16. Befestigungskonsole nach einem der Anprüche 11 bis 15, dadurch gekennzeichnet, daß der Anschlußwinkel (22) an der Außenseite seines Kopfteiles (44) eine als Aufhängnase ausgebildete Kupplung (26) aufweist, die in eine Durchbrechung (79) des Adapters (77) einhängbar ist.

17. Befestigungskonsole nach einem oder mehreren der Ansprüche 11 bis 15, dadurch gekennzeichnet, daß der Adapter (77) wenigstens einen parallel zum Boden (29) des Kabelkanals (27) verlaufenden Befestigungsflansch (84) aufweist, der mit einer Mehrzahl von Löchern (85) versehen ist und an seinem einen Ende in eine Schrägwand (82) übergeht, die über eine Umbiegestelle (81) in den hochgezogenen Mittelteil (78) ausläuft.

18. Befestigungskonsole nach Anspruch 17, dadurch gekennzeichnet, daß die den Befestigungsflansch (84) gegenüberliegenden Seite des Adapters (77) eine Schrägwand (82) aufweist, die in eine Stirnfläche (97) ausläuft.

19. Befestigungskonsole nach Anspruch 17, dadurch gekennzeichnet, daß die den Befestigungsflansch (84) gegenüberliegende Seite des Adapters (77) ebenfalls einen parallel zum Boden (29) des Kabelkanals (27) verlaufenden Befestigungsflansch (83) mit Durchbrüchen für Befestigungselemente zum Festlegen des Adapters (77) am Kabelkanal (27) aufweist.

20. Befestigungskonsole nach Anpruch 17 und 19, dadurch gekennzeichnet, daß der Befestigungsflansch (83) des Adapters (77) mehrere vorzugsweise zwei kulissenartige Durchbrechungen (86) aufweist.

21. Befestigungskonsole nach Anspruch 20, dadurch gekennzeichnet, daß die kulissenartige Durchbrechung (86) des Befestigungselementes (83) einen in Längsrichtung des Befestigungsflansches (83) verlaufenden Mittelteil (87) aufweist, der an seinen beiden Enden in einen quer verlaufenden Endteil (88) übergeht.

22. Befestigungskonsole nach Anspruch 20 und 21, dadurch gekennzeichnet, daß die kulissenartige Durchbrechung (86) des Befestigungsflansches (83) zusätzlich wenigstens einen Seitenteil (89) aufweist, der in bezug auf die Endteile (88) nach der entgegengesetzten Richtung verläuft.

23. Befestigungskonsole nach Anspruch 11, dadurch gekennzeichnet, daß dem Adapter (77) mindestens ein Abstützflansch (100) für den Anschlußwinkel (22) zugeordnet ist.

24. Befestigungskonsole nach Anspruch 23, dadurch gekennzeichnet, daß der Adapter (77) einen in drei voneinander getrennte Bereiche aufgeteilten Mittelteil (78) aufweist und daß zwischen zwei Bereichen jeweils ein fensterartiger Durchbruch (99) und ein höhenversetzter Abstützflansch (100) angeordnet ist.

25. Befestigungskonsole nach Anspruch 23 und 24, dadurch gekennzeichnet, daß die an der Außenseite des Adapters (77) liegenden Bereiche des Mittelteils (78) mehrere vorzugsweise zwei Verbindungsarme (101) aufweisen, die an ihrem anderen Ende in den senkrecht zu ihnen verlaufenden Abstützflansch (100) übergehen.

26. Befestigungskonsole nach den Ansprüchen 23 bis 25, dadurch gekennzeichnet, daß zwischen der Oberseite des Abstützflansches (100) und der Unterseite des zugehörigen Mittelteilbereiches (78) ein Spalt freibleibt, dessen Höhe der Kupplung (26) des Anschlußwinkels (22) angepaßt ist.

27. Befestigungskonsole nach den Ansprüchen 23 bis 26, dadurch gekennzeichnet, daß sowohl der Abstützflansch (100) als auch der zugehörige Mittelbereichsteil (78) des Adapters (77) einen seitlich neben dem Verbindungsarm (101) liegenden Freischnitt (102) aufweisen.

28. Befestigungskonsole nach Anspruch 11, dadurch gekennzeichnet, daß der Adapter (77) mehrere im Abstand voneinanderliegende Befestigungsbereiche (93) bzw. (84) aufweist, die Durchbrüche (85) für Befestigungselemente aufweisen und daß die beiden Befestigungsendteile (84) jeweils einen Freiraum (99) zur Unterbringung von Bereichen des Anschlußwinkels (22) bzw. der Kupplung (26) aufweisen.

29. Befestigungskonsole nach Anspruch 28, dadurch gekennzeichnet, daß der obere Befestigungsendteil (84) des Adapters (77) zur Bildung des Freiraumes (109) parallel und im Abstand voneinanderliegende Schenkel (105) aufweist, deren freie Enden in Außenwinklungen (106) übergehen, die sowohl Abstufungen (107) als Schultern (108) aufweisen.

30. Befestigungskonsole nach Anspruch 29, dadurch gekennzeichnet, daß auch der untere Befestigungsendteil (104) des Adapters (77) Schenkel (105) mit Außenabwinklungen (106) aufweist und daß ein Teilbereich der Schenkel (105) eine Verlängerung (110) aufweist, deren vorderes Ende in eine Abwinklung (111) übergeht, die parallel und in Abstand zu der Außenabwinklung (96) angeordnet ist.

31. Befestigungskonsole nach Anspruch 30, dadurch gekennzeichnet, daß auch die Abwinklung (111) Schultern (108) und Abstufungen (107) aufweist.

## Claims

1. Fixing bracket (10) for cable channels (27), such as wall trunking, to a wall or similar edifice, consisting of two plate-shaped base elements (13, 14), whose position to each other may be modified by adjustment facilities, and which on one hand feature a mounting angle (17) for fastening to the wall or similar edifice, on the other hand a connection angle (22) for the cable channel (27), with the two plate-shaped base elements (13, 14) of the fixing bracket (19) being identically shaped and featuring a single central positioner (31) and with each one of the two plate-shaped base elements (13,14) featuring a longitudinal hole (15,16) and with these basic elements being positioned shifted to each other by 90° to the effect that their longitudinal holes (15,16) overlap each other and that the central positioner (31) passes through both longitudinal holes of the two base elements,
characterized by
the plate-shaped basic elements (13 resp. 14) of the fixing bracket (10) additionally being connected to each other with positive fit while maintaining the option of relative mutual dislocation, whereby the connecter of the plate-shaped basic elements (13 resp. 14) is made in form of an intermediate plate (35) which on the diametrical sides feature lugs (36 resp. 37) projecting from the base plane, one lug (36) of which fits into the longitudinal hole (15) of the base element (13) and the other lug (37) of which fits into the longitudinal hole (16) of the base element (14) of the fixing bracket (10).

2. Fixing bracket according to claim 1 characterized by the lugs (36 resp. 37) of the intermediate plate (15) being made as punched lugs.

3. Fixing bracket according to claims 1 and 2, characterized by the punched lugs (36 resp. 37) being positioned in the extension of the respective limiting wall of a non-circular breakthrough (38) of the intermediate plate (35), whereby the two limiting edges of the breakthrough (38) form a right angle.

4. Fixing bracket in compliance with one or several of the above mentioned claims, the one base element being firmly connected to the room wall with a mounting angle and the other base element being firmly connected with the connection angle for a cable channel, characterized by the connection angle (22) featuring several slots (39) for optional insertion of parts (41 resp. 43) of a coupling (25) in form of a snap-on element, and the coupling (25) featuring at least one hook element (48), the hooks (49) of which latch into a groove (47) at the exterior side of the floor (29) of a cable channel (27) in the fastening position (fig. 4 and 5).

5. Fixing bracket in compliance with claim 4, characterized by the coupling (25) being made in form of a one-piece metal element which features a plate-shaped base element (40), which at its upper end (41) angled by 90° features latches (42) and which at its lower end also angled by 90° in the same direction is shaped in form of a spring tongue (43) with a latch (50), and by the hook elements (48), which also form a right angle with the plate-shaped base element (40) of the coupling (25), which do however protrude from the longitudinal edges of the base element (40), being located on the opposite side of the base element (40).

6. Fixing bracket in compliance with claim 5, characerized by the hook elements (48) in flank view being approximately shaped in form of a triangle to the extent that the peak of these triangles taper off respectively into the hook (49).

7. Fixing bracket in compliance with claims 4 to 6, characterized by the larger leg (24) of the connection angle (22) featuring numerous slots (39 resp. 51), which optionally function in union with the bent ledges (41 resp. 43) of the base element (40) of the coupling (25) (fig. 4).

8. Fixing bracket in compliance with claims 4 to 7, characterized by the coupling (25) assuming a mounting resp. readiness position in which a fastening groove (46) of the floor (29) of the cable channel (27) may be swivelled without any effort and by the hooks (47) of the hook element (48) latching into another groove (47) of the floor (29) of the cable channel (27) after pressure is applied in swivelling direction and by the latch (50) of the spring tongue (43) snapping behind the limiting edge of the slot (51) of the leg (24) of the connection angle (22) in the coupling's terminal position (25).

9. Fixing bracket in compliance with one or several of the claims 4 to 8 characterized by the one end of the large leg (24) of the connection angle (22) being bent by 90° in relation to the angle plane to form a head element (44) and by a coupling in form of a suspension lug (26) for the cable channel (27) being positioned on the upper side of this head element (44).

10. Fixing bracket in compliance with claim 9, characterized by the suspension lug (26) being located on the exterior side of a dent (45) of the head element (44) of the leg (24) of the connection angle (22) and featuring a sub-divided surface (53) (fig.3).

11. Fixing bracket in compliance with claim 1 and 4, characterized by the coupling (25) in form of a snap element being connectable to an adapter (77) which itself is connected to one of the walls of the cable channel (27), preferably with its floor (29).

12. Fixing bracket in compliance with claim 11, characterized by the adapter (77) preferably being a one-piece metal element with a center element (78) allowing disengagable attachment of the coupling (25) and featuring at least one lateral mounting element (84).

13. Fixing bracket in compliance with claim 11 and 12, characterized by the central element (78) of the adapter (77) being bulged and featuring at least two breakthroughs (79) arranged in distance to each other, the limiting edges (80) of which may be engaged with sectors of the couplings (25 resp. 26) of the connection angle (22).

14. Fixing bracket in compliance with claim 13, characterized by the connection angle (22) on one hand featuring several slots (39) for optional insertion of coupling parts (25), the hooks (49) of which hook behind one of the limiting edges (80) of a breakthrough (79) of the adapter (77), and on the other hand featuring another coupling (26) which engages with a limiting edge (80) of another breakthrough (79) of this adapter (77).

15. Fixing bracket in compliance with claims 13 and 14, characterized by the coupling (25) being shaped in form of a one-piece metal element which features a plate-shaped base element (40), the upper end of which is angled by 90° and is shaped in form of a hook element (48), while its lower end is angled in the same direction, however is shaped in form of a spring tongue featuring a latch and the hook elements (48) being located on the oposite side of the base element (50), the hooks (49) of which hook behind limiting edges (80) of a breakthrough (79) of the adapter (77).

16. Fixing bracket in compliance with one of the claims 11 to 15, characterized by the connection angle (22) featuring a coupling (26) shaped as suspension lug at the exterior side of its head element (44) which may be hooked into a breakthrough (79) of the adapter (77).

17. Fixing bracket in compliance with one or several of the claims 11 to 15 characterized by the adapter (77) featuring at least one fastening flange (84) running parallel to the floor (29) of the cable channel (27), which features several holes (85) and passes into a angled wall (82) at its one end which tapers off into a bending point (81) in the bulged center element (78).

18. Fixing bracket in compliance with claim 17, characterized by the side of the adapter (77) opposite to the fastening flange (84) featuring an angled wall (82) which tapers off into a fore-part (97).

19. Fixing bracket in compliance with claim 17, characterized by the side of the adapter (77) opposite to the fastening flange (84) also featuring a fastening flange (83) running parallel to the floor (29) of the cable channel (27) with breakthroughs for fastening elements to attach the adapter (77) to the cable channel (27).

20. Fixing bracket in compliance with claims 17 and 19, characterized by the fastening flange (83) of the adapter (77) featuring several preferably two link-type breakthroughs (86).

21. Fixing bracket in compliance with claim 20, characterized by the link-type breakthroughs (86) of the fastening element (83) featuring a central element (87) running the longitudinal length of the fastening flange (83) which at its both ends tapers off to a transversal head element (88).

22. Fixing bracket in compliance with claims 20 and 21, characterized by the link-type breakthrough (86) of the fastening flange (83) in addition featuring at least one lateral element (89) which in relation to the end elements (88) runs in the opposite direction.

23. Fixing bracket in compliance with claim 11, characterized by the adapter (77) being allocated at least one support flange (100) for the connection angle (22).

24. Fixing bracket in compliance with claim 32, characterized by the adapter (77) featuring a central element (78) subdivided into three sectors separated from each other and that a window-like breakthrough (99) and a vertically shifted support flange (100) are located respectively between two sectors each.

25. Fixing bracket in compliance with claim 23 and 24, characterized by the sectors of the central element (78) located at the exterior side of the adapter (77) featuring several preferably two connection arms (101), which taper off into the support flange (100) running vertically to these at their other end.

26. Fixing bracket in compliance with claims 23 to 25, characterized by a slot remaining open between the upper side of the support flange (100) and the lower side of the pertinent middle element sector (78), the height of which is adapted to the coupling (26) of the connection angle (22).

27. Fixing bracket in compliance with claims 23 to 26, characterized by both the support flange (100) as well as the pertinent central element sector (78) of the adapter (77) featuring a free punch in lateral position next to the connection arm (101).

28. Fixing bracket in compliance with claim 11, characterized by the adapter (77) featuring several mounting sectors (93) resp. (84) in a distance from each other which feature breakthroughs (85) for fastening elements and by the two fastening end elements (84) each featuring a vacant space (99) to accommodate sectors of the connection angle (22) resp. of the coupling (26).

29. Fixing bracket in compliance with claim 28, characterized by the upper fastening end element (84) of the adapter (77) featuring legs (105) parallel to and in a distance from each other for formation of this vacant space (109), the free ends of which taper off in exterior angles (106) which feature graduations (107) as well as shoulders (108).

30. Fixing bracket in compliance with claim 29, characterized by the lower fastening end part (104) of the adapter (77) also featuring legs (105) with exterior anglings (106) and by a section of the angle (105) featuring an extension (110), the front end of which tapers off to an angling (111), which is arranged parallel and in a distance to the exterior angling (96).

31. Fixing bracket in compliance with claim 30, characterized by the angling (111) also featuring shoulders (108) and graduations (107).

## Revendications

1. Console de fixation (10) pour chemins de câbles (27), en particulier goulottes de paroi, à une paroi ou similaire, composée de deux corps de base (13, 14) en forme de plaque dont la position opposée est modifiable en ayant recours à des dispositifs de réglage et présentant, d'un côté, un angle de fixation (17) à apposer à la paroi ou similaire, d'un autre côté, un angle de raccordement (22) pour le chemin de câbles (27), les deux corps de base (13, 14) en forme de plaque de la console de fixation (10) étant adaptés entre eux et présentant un seul fixateur central (31) et que chacun des deux corps de base (13, 14) en forme de plaque présente un trou oblong (15, 16) et que ces corps de base sont disposés de façon déplacée de 90° l'un par rapport à l'autre de telle manière que leurs trous oblongs (15, 16) se chevauchent et que le fixateur central (31) traverse les deux corps de base,
caractérisée
en ce que les deux corps de base en forme de plaque (13 voire 14) de la console de fixation (10) sont reliés entre eux tout en maintenant la possibilité du déplacement relatif réciproque l'un par rapport à l'autre en plus par des pièces d'un raccordeur à engagement positif, le raccordeur des corps de base (13 voire 14) étant formé en tant que plaque intermédiaire (35) présentant vers les côtés diamétralement opposées à partir du niveau de base des taquets saillants (36 voire 37) dont des taquets (36) s'engrènent dans le trou oblong (15) du corps de base (13) et les autres taquets (37) dans le trou oblong (16) du corps de base (14) de la console de fixation (10).

2. Console de fixation selon la revendication 1, caractérisée en ce que les taquets (36 voire 37) de la plaque intermédiaire (15) sont formés en tant que taquets poinçonnés.

3. Console de fixation selon les revendications 1 à 2, caractérisée en ce que les taques poinçonnés (36 voire 37) se trouvent dans le prolongement respectivement d'une paroi de délimitation d'un passage ovalisé (38) de la plaque intermédiaire (35), les deux bords de délimitation du passage (38) formant ensemble un angle droit.

4. Console de fixation selon l'une ou plusieurs des revendications précédentes pour laquelle l'un des corps de base est relié de façon fixe à un angle de fixation de la paroi et l'autre corps de base à l'angle de raccordement pour un chemin à câble, caractérisée en ce que l'angle de raccordement (22) présente plusieurs fentes (39) pour l'introduction au choix de pièces (41 voire 43) d'un coupleur (25) formé en tant qu'élément à enclenchement et que le coupleur (25) présente au moins un élément à crochet (48) dont le crochet, en position de fixation, s'engrène dans une gouttière (47) au côté extérieur du fond (29) d'un chemin de câbles (27) (fig. 4 et 5).

5. Console de fixation selon la revendication 4, caractérisée en ce que le coupleur (25) est formé en tant que corps métallique d'une seul pièce présentant un corps de base en forme de plaque (40) dont l'extrémité supérieure pliée sur 90° (41) présente des encliquetages (42) et dont l'extrémité inférieure également pliée de 90° dans la même direction est formée en tant que languette élastique (43) munie d'un encliquetage (50) et que sur le côté opposé du corps de base (40) reposent les éléments crochet (48) formant également un angle droit avec le corps de base en forme de plaque (40) du coupleur (25), saillant cependant des bords longitudinaux du corps de base (40) (fig. 3).

6. Console de fixation selon la revendication 5, caractérisée en ce que, vue latéralement, les éléments crochet (48) sont organisés à peu près sous forme de triangle de telle façon que la pointes de ce triangle se termine respectivement dans le crochet (49).

7. Console de fixation selon les revendications 4 à 6, caractérisée en ce que le côté le plus grand (24) de l'angle de raccordement (22) présente un certain nombre de fentes (39 voire 51) agissant au choix avec les saillies pliées (41 voire 43) du corps de base en forme (40) du coupleur (25) (fig. 4).

8. Console de fixation selon les revendications 4 à 7, caractérisée en ce que le coupleur (25) prend une position de montage voire d'attente dans laquelle une rainure de fixation (46) du fond (29) du chemin de câbles (27) peut être basculée sans problème et que par une pression s'effectuant dans le sens du basculement, les crochets (47) de l'élément crochet (48) s'accrochent dans une autre rainure (47) du fond (29) du chemin de câbles (27) et que dans la position finale du coupleur (25), l'encliquetage (50) de la languette élastique (43) s'enclenche derrière le bord de délimitation de la fente (51) du côté (24) de l'angle de raccordement (22).

9. Console de fixation selon une ou plusieurs des revendications 4 à 8 caractérisée en ce que une extrémité du grand côté (24) de l'angle de raccordement (22) est replié de 90° par rapport au niveau côté pour former une partie de tête (44) et que sur la face supérieure de cette partie de tête (44) est disposé un coupleur formé en tant que taquet de suspension (26) pour le chemin de câbles (27).

10. Console de fixation selon la revendication 9, caractérisée en ce que le taquet de suspension (26) est disposé à la face extérieure d'une cavité (45) de la partie de tête (44) du côté (24) de l'angle de raccordement (22) et présente une surface divisée (53) (fig. 3).

11. Console de fixation selon les revendications 1 et 4, caractérisée en ce que le coupleur (25) formé en tant qu'élément d'enclenchement peut être raccordé à un adaptateur (77) relié de son côté à l'une des parois du chemin de câbles (27), de préférence à son fond (29).

12. Console de fixation selon la revendication 11, caractérisée en ce que l'adaptateur (77) est un corps de préférence métallique d'une seule pièce présentant une pièce centrale (78) servant à apposer de façon amovible le coupleur (25) et au moins une pièce de fixation latérale (84).

13. Console de fixation selon les revendications 11 et 12, caractérisée en ce que la pièce centrale (78) de l'adaptateur (77) est tirée vers le haut et pourvue au moins de deux passages (79) disposés à distance l'un de l'autre dont les bords de délimitation (80) agissent ensemble avec des zones des coupleurs (25 voire 26) de l'angle de raccordement (22).

14. Console de fixation selon la revendication 13, caractérisée en ce que l'angle de raccordement (22) présente d'un côté plusieurs fentes (39) pour l'introduction au choix de parties du coupleur (25) dont les crochets (49) saisissent derrière l'un des bords de délimitation (80) d'un passage (79) de l'adaptateur (77) et, d'un autre côté, possédant un autre coupleur (26) agissant ensemble avec un bord de délimitation d'un autre passage (79) de cet adaptateur (77).

15. Console de fixation selon les revendications 13 et 14, caractérisée en ce que le coupleur (25) est formé en tant que corps métallique d'une seul pièce présentant un corps de base en forme de plaque (40) dont l'extrémité supérieure est pliée sur 90° et formée en tant qu'élément crochet (48) alors que son extrémité inférieure, pliée dans la même direction est pourvue d'une languette élastique dotée d'un enclenchement et que sur le côté opposée du corps de base (50) se trouvent des éléments crochet (48) dont les crochets (49) saisissent derrière les bords de délimitation (80) d'un passage (79) de l'adaptateur (77).

16. Console de fixation selon l'une des revendications 11 à 15, caractérisée en ce que l'angle de raccordement (22) présente au côté extérieur de sa partie de tête (44) un coupleur (26) formé en tant que taquet de suspension pouvant être accroché dans un passage (79) de l'adaptateur (77).

17. Console de fixation selon une ou plusieurs des revendications 11 à 15 caractérisée en ce que l'adaptateur (77) présente au moins une bride de fixation (84) allant parallèlement au fond (29) du chemin de câbles (27) pourvue d'une quantité de trous (85) et devenant à une extrémité une paroi oblique (82) se terminant dans la pièce centrale relevée(78) au-dessus d'un endroit plié (81).

18. Console de fixation selon la revendication 17, caractérisée en ce que le côté de l'adaptateur (77) opposé à la bride de fixation (84) présente une paroi oblique (82) se terminant en une surface frontale (97).

19. Console de fixation selon la revendication 17, caractérisée en ce que le côté de l'adaptateur (77) opposé à la bride de fixation (84) présente également une bride de fixation (83) allant parallèlement au fond (29) du chemin de câbles (27) avec des passages pour éléments de fixation pour fixer l'adaptateur (77) au chemin de câbles (27).

20. Console de fixation selon les revendications 17 et 18, caractérisée en ce que la bride de fixation (83) de l'adaptateur (77) présente plusieurs, de préférence, deux passages (86) en forme de coulisse.

21. Console de fixation selon la revendication 20, caractérisée en ce que le passage en forme de coulisse (86) de l'élément de fixation (83) présente, allant longitudinalement par rapport à la bride de fixation (83), une partie centrale (87) se terminant, à ses deux extrémités, en une partie finale (88) obliquante.

22. Console de fixation selon les revendications 20 et 21, caractérisée en ce que le passage en forme de coulisse (86) de la bride de fixation (83) présente en plus une partie latérale (89) allant dans une direction apposée par rapport aux parties finales (88).

23. Console de fixation selon la revendication 11, caractérisée en ce que qu'au moins une bride de soutien (100) pour l'angle de raccordement (22) est associée à l'adaptateur (77).

24. Console de fixation selon la revendication 23, caractérisée en ce que l'adaptateur (77) présente une partie latérale (78) divisée en trois zones séparées les unes des autres et qu'entre deux zones il y a un passage en forme de fenêtre (99) et une bride de soutien (100) placée plus haut.

25. Console de fixation selon les revendications 23 et 24, caractérisée en ce que les zones de la partie centrale (78) se trouvant à la face extérieure de l'adaptateur (77) présentent plusieurs, de préférence, deux bras de connexion (101) passant à leur autre extrémité dans la bride de support (100) allant vers eux verticalement.

26. Console de fixation selon les revendications 23 à 25, caractérisée en ce qu'entre la face supérieure de la bride de soutien (100) et la face inférieure de la zone centrale (78) correspondante, il reste une fente dont la hauteur est adaptée au coupleur (26) de l'angle de raccordement (22).

27. Console de fixation selon les revendications 23 à 26, caractérisée en ce que tant la bride de soutien (100) que la partie de la zone correspondante (78) de l'adaptateur (77) présentent une découpe se trouvant latéralement à côté du bras de connexion (101).

28. Console de fixation selon la revendication 11, caractérisée en ce que l'adaptateur (77) présente plusieurs zones de fixation (93) voire (84) placées à distance l'une par rapport à l'autre présentant des passages (85) pour les éléments de fixation et que les deux pièces finales de fixation (84) présentent respectivement un espace libre (99) pour le logement de zones de l'angle de raccordement (22) voire du coupleur (26).

29. Console de fixation selon la revendication 28, caractérisée en ce que la partie finale supérieure de fixation (84) présente de l'adaptateur (77) pour la formation de l'espace libre (109) des côtés (105) parallèlement et placés à distance les uns par rapport aux autres, dont les extrémités libres se transforment en pièces angulaires extérieures (106) présentant tant des échelonnements (107) que des épaules (108).

30. Console de fixation selon la revendication 29, caractérisée en ce que la partie finale inférieure de fixation (104) de l'adaptateur (77) présente des côtés (105) avec pièce angulaire extérieure (106) et qu'une zone de la partiel des côtés (105) présente un prolongement (110) dont l'extrémité avant se transforme en pièce angulaire (111) placée parallèlement et à distance par rapport à la pièce angulaire extérieure (96).

31. Console de fixation selon la revendication 30, caractérisée en ce que la pièce angulaire extérieure (111) présente également des épaules (108) et des échelonnements (107).
